# EUROPÄISCHE PATENTSCHRIFT

(11) **EP 4 114 243 B1**
(45) Veröffentlichungstag und Bekanntmachung des Hinweises auf die Patenterteilung: **22.01.2025**
(21) Anmeldenummer: 21707948.2
(22) Anmeldetag: 23.02.2021
(51) Int. Cl.: A47L 15/42, D06F 39/14

(54) **WASSERFÜHRENDES HAUSHALTSGERÄT MIT EINER SCHALTBAREN AUTOMATISCHEN ODER MANUELLEN TÜRÖFFNUNGSANORDNUNG**
WATER-CONDUCTING DOMESTIC APPLIANCE COMPRISING A SWITCHABLE AUTOMATIC OR MANUAL DOOR-OPENING ASSEMBLY
APPAREIL MÉNAGER À CIRCULATION D'EAU COMPRENANT UN ENSEMBLE D'OUVERTURE DE PORTE AUTOMATIQUE OU MANUEL COMMUTABLE

(30) Priorität: 02.03.2020 DE 102020105533; 20.03.2020 DE 102020107758; 03.04.2020 DE 102020109318
(43) Veröffentlichungstag der Anmeldung: 11.01.2023
(73) Patentinhaber: Miele & Cie. KG, 33332 Gütersloh (DE)
(72) Erfinder: WEGENER, Dirk, 33649 Bielefeld (DE); MARKS, Volker, 33611 Bielefeld (DE); KRÖGER, Günter, 32369 Rahden (DE)
(86) Internationale Anmeldenummer: PCT/EP2021/054399
(87) Internationale Veröffentlichungsnummer: WO 2021/175651

(56) Entgegenhaltungen:
- EP-A1- 0 541 974
- EP-B1- 0 541 974
- CN-A- 110 279 377
- DE-A1- 102017 218 501
- DE-A1- 102018 008 895
- US-A1- 2019 040 670

## Beschreibung

Die Erfindung betrifft ein Haushaltsgerät, insbesondere ein wasserführendes Haushaltsgerät, wie zum Beispiel eine Geschirrspülmaschine, mit einem einen Geräteraum bereitstellenden Gerätegehäuse, das für einen Zugriff auf den Geräteraum eine Beschickungsöffnung aufweist, mit einer um eine Schwenkachse verdrehbar gelagerten Gerätetür für einen Verschluss der Beschickungsöffnung, mit einer Motoreinheit, die in Wirkverbindung mit der Gerätetür steht und mittels welcher die Gerätetür aus einer Offenstellung in eine die Beschickungsöffnung verschließenden Verschlussstellung überführbar ist, und mit einer zwischen Motoreinheit und Gerätetür angeordneten Kupplungseinrichtung, die antriebsseitig mit der Motoreinheit und abtriebsseitig mit der Gerätetür in Wirkverbindung steht.

Haushaltsgeräte im Allgemeinen sowie wasserführende Haushaltsgeräte im Speziellen sind aus dem Stand der Technik an sich gut bekannt, weshalb es eines gesonderten druckschriftlichen Nachweises an dieser Stelle nicht bedarf. Es sei deshalb auch nur beispielhaft auf die DE 10 2017 218 501 A1 verwiesen, die ein gattungsgemäßes Haushaltsgerät in der Ausgestaltung einer Geschirrspülmaschine offenbart.

Ein Haushaltsgerät im Sinne der Erfindung ist insbesondere ein wasserführendes Haushaltsgerät, wie zum Beispiel eine Geschirrspülmaschine, eine Waschmaschine und/oder ein Trockner. Unter den Begriff "Haushaltsgerät" fallen aber auch Kühlschränke, Backöfen, Dampfgarer, Mikrowellen und/oder dgl.

Ein gattungsgemäßes Haushaltsgerät verfügt über ein Gerätegehäuse, das einen Geräteraum bereitstellt. Für einen verwenderseitigen Zugriff auf den Geräteraum weist das Gerätegehäuse eine Beschickungsöffnung auf.

Für einen Verschluss der Beschickungsöffnung im Verwendungsfall des Haushaltsgerätes ist eine Gerätetür vorgesehen, die um eine Schwenkachse verschwenkbar am Gerätegehäuse angeordnet ist. Im bestimmungsgemäßen Verwendungsfall kann die Gerätetür verwenderseitig aus einer Offenstellung in eine die Beschickungsöffnung verschließende Verschlussstellung und umgekehrt überführt werden. Der Verschluss der Beschickungsöffnung durch die Gerätetür in Verschlussstellung ist im Falle eines wasserführenden Haushaltsgerätes bevorzugterweise fluiddicht.

Um zumindest eine Verschwenkbewegung der Gerätetür aus einer Offenstellung in eine die Beschickungsöffnung verschließenden Verschlussstellung zu vereinfachen, ist aus der DE 10 2017 218 501 A1 die Verwendung einer Motoreinheit bekannt, die in Wirkverbindung mit der Gerätetür steht. Dabei gestattet es die Motoreinheit, die Gerätetür nach einer vorherigen verwenderseitigen Aktivierung der Motoreinheit aus einer Offenstellung in eine die Beschickungsöffnung verschließende Verschlussstellung zu überführen, und dies ohne weiteren manuellen Eingriff durch den Verwender.

Die aus der DE 10 2017 218 501 A1 bekannte Konstruktion verfügt des Weiteren über einen Einklemmschutz in Form einer Kupplungseinrichtung, die zwischen Motoreinheit und Gerätetür angeordnet ist und antriebsseitig mit der Motoreinheit und abtriebsseitig mit der Gerätetür in Wirkverbindung steht. Diese Kupplungseinrichtung verfügt über eine Kupplung, die insbesondere bei Überschreiten eines Türgrenzwiderstands durchrutscht und so eine Entkopplung von Gerätetür und Motoreinheit bewirkt. Ein solcher Türgrenzwiderstand wird beispielsweise bei Einklemmen eines Gegenstandes zwischen dem Gerätegehäuse und der Gerätetür erreicht, so dass mittels der Kupplungseinrichtung ein mögliches verwenderseitiges Verletzungsrisiko reduziert ist. Als Kupplung der Kupplungseinrichtung kommt nach der DE 10 2017 218 501 A1 bevorzugterweise eine Rutschkupplung oder eine Trennkupplung zum Einsatz.

Die US 2019/0040670 A1 offenbart eine Kupplungseinrichtung einer Scharnieranordnung für eine Tür eines Haushaltsgeräts.

Obgleich sich die aus der DE 10 2017 218 501 A1 vorbekannte Konstruktion im alltäglichen Praxiseinsatz bewährt hat, besteht Verbesserungsbedarf. So ermöglicht es die vorbekannte Konstruktion nicht, verwenderseitig zwischen einer manuellen und einer motorangetriebenen Türschließung zu wählen. Erst recht ist es nicht vorgesehen, manuell nachhelfen zu können, wenn die motorangetriebene Türschließung zu langsam erfolgt. Es ist deshalb die **Aufgabe** der Erfindung, ein Haushaltsgerät der gattungsgemäßen Art dahingehend weiterzuentwickeln, dass konstruktiv die verwenderseitige Wahlfreiheit zur manuellen oder motorangetriebenen Türschließung gegeben ist.

Zur **Lösung** dieser Aufgabe wird mit der Erfindung ein Haushaltsgerät mit den Merkmalen von Anspruch 1 vorgeschlagen.

Das erfindungsgemäße Haushaltsgerät verfügt über eine Kupplungseinrichtung mit einer Kupplung, die schaltbar ausgebildet ist. Dabei kann die Kupplung aus einer entkuppelten Stellung in eine gekuppelte Stellung und umgekehrt überführt werden. In der entkuppelten Stellung ist die Wirkverbindung zwischen der Motoreinheit und der Gerätetür unterbrochen, was eine manuelle Betätigung der Gerätetür ermöglicht, und zwar ohne eine durch die Motoreinheit bedingte Schwergängigkeit. Denn dank der Entkupplung dreht die Motoreinheit infolge einer manuellen Verschwenkung der Gerätetür nicht mit.

Befindet sich die Kupplung in gekuppelter Stellung, so ist die Wirkverbindung zwischen Motoreinheit und Gerätetür geschlossen, so dass ein Antrieb der Gerätetür durch die Motoreinheit erfolgen kann.

Die erfindungsgemäße Ausgestaltung ermöglicht es mithin in Abkehr zur DE 10 2017 218 501 A1 zwischen einer manuellen Türbetätigung einerseits und einer motorangetriebenen Türbetätigung andererseits unterscheiden zu können.

Erfindungsgemäß ist des Weiteren vorgesehen, dass die Kupplung eingerichtet ist, im Betriebsfall der Motoreinheit eine automatische Schaltung aus der entkuppelten Stellung in die gekuppelte Stellung zu bewirken. Die mit der Kupplungseinrichtung vorgesehene Kupplung sorgt mithin dafür, dass es bei einer Aktivierung der Motoreinheit zu einer automatischen Schaltung der Kupplung kommt, wobei diese aus der entkuppelten Stellung in die gekuppelte Stellung überführt wird.

Die Kupplung befindet sich mithin grundsätzlich in entkuppelter Stellung, was eine manuelle Türbetätigung ermöglicht. Soll nun insbesondere zum Überführen der Gerätetür in die Verschlussstellung kein manuelles, sondern ein motorangetriebenes Betätigen der Gerätetür stattfinden, so bedarf es hierfür keiner separaten Schaltung der Kupplung. Denn diese schaltet automatisch, wird also automatisch in die gekuppelte Stellung überführt, sobald der Betriebsfall der Motoreinheit einsetzt, d.h. die Motoreinheit verwenderseitig gestartet wird.

Diese erfindungsgemäße Einrichtung der Kupplung erbringt im Wesentlichen zwei Vorteile. Zum einen ist die verwenderseitig gegebene Möglichkeit geschaffen, zwischen einem manuellen und einem motorangetriebenen Antrieb der Gerätetür wahlweise unterscheiden zu können. Insbesondere ist es möglich, die Gerätetür entweder manuell oder motorangetrieben in ihre Verschlussstellung zu überführen. Des Weiteren ermöglicht es die erfindungsgemäße Kupplungsausgestaltung, dass ein motorangetriebener Schließvorgang der Gerätetür auch manuell unterstützt, insbesondere zur Beschleunigung des Schließvorgangs auch manuell zu Ende geführt werden kann. Dabei wird zur Einkupplung oder Auskupplung der Kupplung keine weitere Aktorik benötigt. Dies ergibt sich allein in Abhängigkeit eines bestimmungsgemäßen Betriebs der Motoreinheit.

Die Gerätetüren vorbekannter Haushaltsgeräte werden typischerweise per Hand bedient, und zwar sowohl hinsichtlich eines Öffnens als auch hinsichtlich eines Schließens. Es ist gewünscht, dass Gerätetüren auch motorisch verfahren werden können, insbesondere zum Zwecke der Schließung. Für die Auslösung eines solchen Motorbetriebs sind beispielsweise Sensoren am Gerät vorgesehen, so dass ein Verwender durch eine einfache Bewegung mit der Hand oder dem Fuß den Motorbetrieb auslösen und somit eine automatische Türschließung einleiten kann, so auch gemäß der vorbekannten Konstruktion nach der DE 10 2017 218 501 A1.

Die vorbekannte Konstruktion hat allerdings den Nachteil, dass eine manuelle Türöffnung immer entgegen der Motorkraft des in Wirkverbindung mit der Gerätetür stehenden Motors zu erfolgen hat. Auch bei stillstehendem Motor muss immer die Motorwelle mitbewegt werden, was entsprechenden Kraftaufwand bei einem manuellen Öffnen erforderlich macht. Die erfindungsgemäße Konstruktion schafft hier Abhilfe, da sich die Kupplung grundsätzlich in entkuppelter, d.h. ausgekuppelter Stellung befindet, so dass ein manuelles Öffnen der Tür nicht zu einem Mitverdrehen der Motorwelle der Motoreinheit führt. Bei einem nachfolgenden Schließen der Gerätetür durch Motorkraft erfolgt ohne weiteres Hinzutun durch den Verwender ein automatisches Einkuppeln der Kupplung, d.h. ein Überführen der Kupplung in die gekuppelte Stellung allein aufgrund des sich nach vorheriger Aktivierung drehenden Motors. Dies ermöglicht eine verwenderseitig einfache Handhabung ohne zusätzliche Aktuatoren zur Betätigung der Kupplung.

Der erfindungsgemäße Clou besteht insbesondere darin, dass die Kupplung nur dann kuppelt, wenn die Motoreinheit in Drehbewegung ist. Es ist mithin eine Art Freilaufkupplung gegeben. Wenn ein manueller Betrieb stattfindet, die Motoreinheit also nicht aktiv ist, greift die Kupplung nicht, so dass ein vom Motor losgekuppelter Betrieb möglich ist. Sobald sich aber der Verwender dafür entscheidet, wahlweise den Motorbetrieb einzuschalten, greift die Kupplung, so dass dann ein motorisches Verfahren erfolgt.

Gemäß einem weiteren Merkmal der Erfindung ist vorgesehen, dass die Wirkverbindung zwischen Motoreinheit und Gerätetür ein Kraftübertragungsmittel aufweist. Ein solches Kraftübertragungsmittel ermöglicht ein motorunterstütztes Schließen und/oder Öffnen der Gerätetür.

Gemäß einem Ausführungsform der Erfindung ist vorgesehen, dass die Wirkverbindung zwischen Motoreinheit und Gerätetür einen Seilzug als Kraftübertragungsmittel aufweist. Ein solcher Seilzug ermöglicht ein motorunterstütztes Schließen der Gerätetür. Ein motorangetriebenes Überführen der Gerätetür in eine Offenstellung ist gemäß dieser Ausführungsform nicht vorgesehen. Ein Öffnen der Gerätetür hat mithin manuell stattzufinden, wobei dann ein Schließen der Gerätetür wahlweise manuell oder motorgetrieben erfolgt.

Statt eines Seilzuges kann als Kraftübertragungsmittel auch ein Zahnriemen oder eine Kette, beispielsweise eine Rollen- oder Kugelkette vorgesehen sein. Das Kraftübertragungsmittel kann in diesem Fall also als formschlüssig wirkendes Zugmittel ausgebildet sein.

Gemäß einem weiteren Merkmal der Erfindung ist vorgesehen, dass das Kraftübertragungsmittel, beispielsweise der Seilzug, einendseitig an einem Hebel der Gerätetür angeordnet ist. Im Betriebsfall der Motoreinheit wird das Kraftübertragungsmittel, insbesondere der Seilzug, unter Zugspannung gesetzt. Da das Kraftübertragungsmittel, insbesondere der Seilzug, einendseitig an einem Hebel der Gerätetür angeordnet ist, wird hierdurch ein auf die Gerätetür einwirkendes Drehmoment erzeugt, und zwar um die Schwenkachse der Gerätetür, infolge dessen es zu einer motorangetriebenen Türbewegung, insbesondere Türschließung kommt.

Gemäß einem weiteren Merkmal der Erfindung für das Ausführungsbeispiel, bei dem das Kraftübertragungsmittel als Seilzug ausgebildet ist, ist vorgesehen, dass der Seilzug anderendseitig an einem verdrehbar gelagerten Antriebsmittel, nämlich an einer Seiltrommel angeordnet ist, auf die der Seilzug zumindest teilweise aufwickelbar ist. Im bestimmungsgemäßen Verwendungsfall erfolgt durch die Motoreinheit eine Verdrehbewegung der Seiltrommel. Dies bewirkt ein Aufwickeln des Seilzugs auf die Seiltrommel, wobei der Seilzug in schon vorbeschriebener Weise unter Zugspannung steht, so dass es zu einer Verschwenkbewegung der Gerätetür kommt. Bei einem manuellen Öffnen der Gerätetür wird der Seilzug von der Seiltrommel abgewickelt, wobei bevorzugterweise ein auf die Seiltrommel einwirkendes Federrückstellelement vorgesehen ist, so dass der von der Seiltrommel abgewickelte Abschnitt des Seilzugs stets unter einer gewissen Zugvorspannung steht, so dass im Betriebsfall der Motoreinheit ein sofortiges Ansprechen der Gerätetür sichergestellt ist.

Alternativ kann das einendseitig an einem Hebel der Gerätetür angeordnete Kraftübertragungsmittel, insbesondere wenn dieses als Zahnriemen oder Kette ausgebildet ist, auch über ein verdrehbar gelagertes Antriebsmittel, beispielsweise eine Antriebsrolle oder Zanhrad, geführt und anderendseitig an einer Türfeder, welche in an sich bekannter Weise einem Gewichtsausgleich der Tür dient, fixiert sein.

Es ist gemäß einem weiteren Merkmal der Erfindung vorgesehen, dass die Motoreinheit unter Zwischenschaltung der Kupplungseinrichtung in Wirkverbindung mit dem Antriebsmittel, etwa der Seiltrommel oder der Antriebsrolle, steht, um im Betriebsfall der Motoreinheit ein Verdrehen des Antriebsmittels zu bewirken.

Bei einer rein manuellen Betätigung der Gerätetür wird das Kraftübertragungsmittel bewegt und das Antriebsmittel verdreht, ohne dass es zu einer Mitverdrehung der Motorwelle der Motoreinheit kommt. So wird im Fall eines als Seilzug ausgebildeten Kraftübertragungsmittels bei einer rein manuellen Betätigung der Gerätetür etwa der Seilzug von der Seiltrommel bei einem Öffnen der Tür abgewickelt und bei einem erneuten Schließen der Tür wieder aufgewickelt, ohne dass es zu einer Mitverdrehung der Motorwelle der Motoreinheit kommt. Wird indes bei geöffneter Gerätetür die Motoreinheit gestartet, so kuppelt die Kupplung ein und es erfolgt ein motorangetriebenes Verdrehen des Antriebsmittels, also der Seiltrommel oder der Antriebsrolle bzw. Zahnrad, mit der Folge, dass ein Überführen der Gerätetür in die Verschlussstellung motorangetrieben stattfindet. Dabei erfolgt ein Aufwickeln des Seilzugs auf die Seiltrommel bei einer manuellen Gerätetürbedienung dadurch, dass die Seiltrommel durch das infolge einer Türöffnung vorgespannte Federrückstellmittel zurück in ihre Ausgangsposition verdreht wird.

Gemäß einem besonderen Merkmal der Erfindung ist vorgesehen, dass die Kupplung ein verdrehfest auf einer Motorwelle der Motoreinheit angeordnetes Drehteil aufweist, das ein um eine Schwenkachse verdrehbar daran angeordnetes Klemmstück trägt. Die Kupplung verfügt mithin über ein Drehteil. Dieses sitzt auf der Motorwelle der Motoreinheit, und zwar verdrehfest. Bei einer motorangetriebenen Verdrehbewegung der Motorwelle kommt es mithin auch zu einem Verdrehen des Drehteils, und zwar um die von der Motorwelle bereitgestellte Drehachse der Motoreinheit.

Das Drehteil trägt ferner ein Klemmstück, das um eine Schwenkachse verdrehbar am Drehteil angeordnet ist. Bevorzugterweise sind zwei solcher Klemmstücke vorgesehen. Diese können jeweils in Relation zum Drehteil verdrehen, und zwar in einer in Relation zum Drehteil radialen Richtung aus einer eingefahrenen Stellung in eine ausgefahrene Stellung und umgekehrt.

Gemäß einem weiteren Merkmal der Erfindung ist vorgesehen, dass das Klemmstück mit einem schwenkachsenentfernten Endabschnitt mit einer von einem Führungsmittel bereitgestellten Kulissenführung zusammenwirkt. Diese Kulissenführung des Führungsmittels bedingt im Betriebsfall ein Verschwenken des damit zusammenwirkenden Klemmstücks in radialer Richtung zum Drehteil. Zu diesem Zweck kann das Klemmstück in seinem schwenkachsenentfernten Endabschnitt über einen in die Kulissenführung des Führungsmittels eingreifenden Zapfen verfügen. Kommt es nun zu einer Verdrehbewegung des Drehteils, so verdreht das Klemmstück einerseits zusammen mit dem Drehteil, und zwar um die Drehachse des Drehteils. Gleichzeitig vollführt das Klemmstück in Relation zum Drehteil eine Verschwenkbewegung um die eigene Schwenkachse, und zwar infolge der Führung des schwenkachsenentfernten Zapfens des Klemmstücks in der zugehörigen Kulissenführung des Führungsmittels.

Gemäß einem weiteren Merkmal der Erfindung ist vorgesehen, dass das Führungsmittel auf einem von der Motorwelle durchragten Lagerbund unter Ausbildung eines Reibsitzes verdrehbar gelagert ist.

Durch die Ausbildung des Reibsitzes auf dem Lagerbund ist sichergestellt, dass das Führungsmittel reibbelastet nicht mitverdreht, wenn das Drehteil verdreht, das vom Drehteil getragene Klemmstück aber noch nicht in seine in Relation zum Drehteil ausgelangte Endposition verfahren ist. Bis zur Erreichung dieser Endposition steht das Führungsmittel in Relation zum Drehteil still, was die Führung des schwenkachsenentfernten Endabschnittes des Klemmstückes entlang der zugehörigen Kulissenführung ermöglicht.

Sobald das Klemmstück in Relation zum Drehteil in seine Endposition verschwenkt ist, nimmt es das Führungsmittel mit, so dass dieses zusammen mit dem Drehteil unter mechanischer Zwischenordnung des Klemmstücks mitverdreht. Um dies zu ermöglichen, ist das Führungsmittel auf dem Lagerbund verdrehbar gelagert. Die Ausbildung des Reibsitzes zwischen Lagerbund und Führungsmittel verhindert mithin nicht eine Mitnahmeverdrehbewegung des Führungsmittels, sondern stellt lediglich sicher, dass eine Verdrehbewegung des Klemmstücks in Relation zum Drehteil stattfindet, bis das Klemmstück seine in Entsprechung der Kulissenführung vorgegebene Endposition erreicht hat.

Gemäß einem weiteren Merkmal der Erfindung ist vorgesehen, dass die Kupplung ein das Drehteil zumindest teilweise aufnehmendes Kupplungsgehäuse aufweist, das eine mit dem Klemmstück zusammenwirkende Innenkontur aufweist. Das Drehteil ist zumindest abschnittsweise innerhalb eines Kupplungsgehäuses angeordnet. Bei einem nicht in Relation zum Drehteil verschwenkten Klemmstück ist das Drehteil gegenüber dem Kupplungsgehäuse frei verdrehbar. Eine Kraftübertragung zwischen Drehteil und Kupplungsgehäuse findet mithin nicht statt.

Das Kupplungsgehäuse weist eine Innenkontur auf, die mit dem Klemmstück zusammenwirkt. Dabei greift das Klemmstück in die Innenkontur des Kupplungsgehäuses ein, sobald sich das Klemmstück in Relation zum Drehteil verschwenkt hat und sich in seiner ausgefahrenen Endposition befindet. In dieser Position des Klemmstücks findet vorzugsweise ein Formschluss zwischen Klemmstück und Innenkontur des Kupplungsgehäuses statt, so dass mittels des Klemmstücks eine Drehmomentübertragung vom Drehteil auf das Kupplungsgehäuse stattfindet. In dieser Position des Klemmstücks ist die Kupplung eingekuppelt, befindet sich also in ihrer gekuppelten Stellung, so dass eine Kraftübertragung von dem motorangetriebenen Drehteil auf das Kupplungsgehäuse stattfinden kann.

Gemäß einem weiteren Merkmal der Erfindung ist vorgesehen, dass die Innenkontur eine zum schwenkachsenentfernten Endabschnitt des Klemmstücks korrespondierend ausgebildete Aufnahmenut, oder -mulde aufweist. In diese Aufnahmenut greift das Klemmstück unter Ausbildung eines Formschlusses ein, wenn sich das Klemmstück in Relation zum Drehteil verschwenkt hat und sich in seiner Endposition befindet. So lange diese Position des Klemmstücks noch nicht erreicht ist, dreht das Drehteil gegenüber dem Kupplungsgehäuse durch, so dass keine Kraftübertragung von der Motoreinheit auf das Kupplungsgehäuse stattfinden kann. Erst wenn das Klemmstück formschlüssig in die zugehörige Aufnahmemulde des Kupplungsgehäuses eingreift, ist ein Kraftschluss gegeben, so dass ein Motordrehmoment auf das Kupplungsgehäuse übertragen werden kann.

Gemäß einem weiteren Merkmal der Erfindung ist vorgesehen, dass das Kupplungsgehäuse eine Abtriebswelle bereitstellt. Diese steht in Wirkverbindung mit dem Antriebsmittel, beispielsweise der Seiltrommel, so dass bei eingekuppelter Kupplung ein Motorantrieb des Antriebsmittels, insbesondere der Seiltrommel, stattfinden kann.

Die Konstruktion der vorbeschriebenen Kupplung gestattet es, dass ein automatisches Schalten der Kupplung stattfindet, sobald die Motoreinheit anfährt. Denn ein Betrieb der Motoreinheit bedingt, dass sich das Drehteil der Kupplung verdreht, und damit auch eine Verdrehung des Klemmstücks in Relation zum Drehteil stattfindet. Sobald das Drehteil um einen gewissen Winkelbetrag um die durch die Motorwelle bereitgestellte Drehachse der Motoreinheit verdreht ist, hat das Klemmstück seine gegenüber dem Drehteil verdrehte Endposition erreicht und greift in eine zugehörige Aufnahmemulde des Kupplungsgehäuses ein. Hierdurch bedingt ist Kraftschluss gegeben, so dass ein Übertrag des motorgenerierten Drehmoments auf das Kupplungsgehäuse und damit auf die Antriebswelle und schlussendlich auf das damit gekoppelte Antriebsmittel, insbesondere die Seiltrommel, stattfindet.

Wird nun trotz motorangetriebener Schließung der Gerätetür manuell nachgeholfen, indem verwenderseitig die Gerätetür manuell nachgeführt wird, so verdreht je nach manueller Kraftbeaufschlagung das Kupplungsgehäuse unter Umständen schneller als das motorangetriebene Drehteil. Dies führt dann zu einem automatischen Entkuppeln, da bei einem schneller verdrehenden Kupplungsgehäuse das von einer Aufnahmemulde aufgenommene Klemmstück von der Aufnahmemulde freigegeben wird. Ein verwenderseitiger manueller Eingriff führt mithin nicht zu einer Kraftbeaufschlagung der Motoreinheit, sondern zu einem automatischen Entkuppeln, da der Formschluss zwischen Klemmstück, und Kupplungsgehäuse aufgehoben wird, wenn das Kupplungsgehäuse durch den manuellen Verwendereingriff schneller, d.h. mit höherer Drehzahl dreht als das motorangetriebene Drehteil der Kupplung. Ein "Anschieben" der Gerätetür durch den Verwender ist mithin durch die erfindungsgemäße Ausgestaltung abgesichert und führt nicht zu einer Beschädigung weder der Kupplung, noch der Motoreinheit. Damit erweist sich die erfindungsgemäße Konstruktion im alltäglichen Praxiseinsatz als robust und handhabungssicher.

Gemäß der Erfindung ist vorgesehen, dass die Kupplungseinrichtung eine zweite Kupplung aufweist, die als Überlastkupplung ausgebildet ist. Diese zweite Kupplung dient insbesondere aus Sicherheitsgründen dem Einklemmschutz und vermeidet eine Türschließung bei einer Blockade der Tür.

Gemäß einem weiteren Merkmal der Erfindung ist vorgesehen, dass die zweite Kupplung ein erstes Kupplungsteil und ein zweites Kupplungsteil aufweist, wobei das zweite Kupplungsteil unter Federvorspannung am ersten Kupplungsteil anliegt. Im Normalfall sind die beiden Kupplungsteile in Wirkverbindung, was dadurch erreicht ist, dass das erste Kupplungsteil feststehend ausgebildet ist und das zweite Kupplungsteil federbelastet gegen das erste Kupplungsteil drückt. Im Betriebsfall wird das von der Motoreinheit bereitgestellte Drehmoment vom ersten Kupplungsteil auf das zweite Kupplungsteil übertragen, so dass in schon vorbeschriebener Weise eine Kraftübertragung von der Motoreinheit auf das zu verdrehende Antriebsmittel, insbesondere die Seiltrommel oder Antriebsrolle, stattfinden kann.

Kommt es zu einer Blockade der Tür, beispielsweise dadurch, dass ein Körperteil des Verwenders in den Türschlitz zwischen der sich schließenden Tür einerseits und dem Gerätegehäuse andererseits gerät, so arbeitet die Motoreinheit gegen den sich hierdurch ergebenden Widerstand an. Sobald der Widerstand zu hoch ist, reicht die kupplungsseitige Federvorspannung nicht mehr aus, um das zweite Kupplungsteil kraftübertragend an das erste Kupplungsteil anzudrücken. Es kommt unter Kraftunterbrechung zu einem Durchrutschen der Kupplungsteile, was ein weiteres Schließen der Gerätetür mit dem Erfolg unterbindet, dass ein Einklemmen im Türspalt sicher verhindert ist.

Gemäß einem weiteren Merkmal der Erfindung ist vorgesehen, dass das erste Kupplungsteil verdrehfest auf der Abtriebswelle der ersten Kupplung angeordnet ist. Demgemäß ist vorgesehen, dass sich an die Motoreinheit zunächst die erste Kupplung und alsdann die zweite Kupplung anschließt. Alternativ hierzu ist eine umgekehrte Anordnung, dergemäß sich an die Motoreinheit zunächst die zweite Kupplung und alsdann die erste Kupplung anschließt.

Von Vorteil der ersten alternativen Ausgestaltung ist, dass die zweite Kupplung sehr viel sensibler eingestellt und der Widerstand, bei dem es zu einem Durchrutschen der zweiten Kupplung kommt, sehr viel genauer vorgegeben werden kann.

Bei der zweiten Kupplung handelt es sich gemäß einem weiteren Merkmal der Erfindung um eine Klauenkupplung.

Die erfindungsgemäße Ausgestaltung erweist sich insgesamt als einfach im Aufbau, robust in der Verwendung und platzsparend im Aufbau. Für einen Ein- und/oder Auskuppelvorgang der ersten Kupplung ist keine zusätzliche Aktorik erforderlich. Dabei ist im ausgekuppelten Zustand der ersten Kupplung ein Handbetrieb der Gerätetür ohne Einschränkungen und ohne erhöhten Kraftaufwand möglich. Zudem gestattet es die erfindungsgemäße Konstruktion, hohe Drehmomente zu übertragen, was eine sichere Türschließung ermöglicht.

Die im Vergleich zum Normalbetrieb als Sonderfälle einzustufenden Betriebsarten "Blockade der Tür" einerseits und "Anschieben der Tür durch einen Verwender" andererseits sind mit der erfindungsgemäßen Konstruktion abgesichert. So ist für den Blockadefall vorzugsweise eine Überlastkupplung, insbesondere eine Klauenkupplung vorgesehen, die bei einem zu hohen Türwiderstand ein Durchrutschen sicherstellt, womit die Kraftübertragung von der Motoreinheit auf die Gerätetür unterbrochen ist. Der Betriebsfall, dass die Gerätetür während eines Motorbetriebs durch den Verwender "angeschoben" wird, ist durch die erste Kupplung selbst abgesichert, da sich etwa das Kupplungsgehäuse gegenüber dem Drehteil in Aufwickelrichtung der Seiltrommel frei verdrehen lässt. Auch insoweit bedarf es keiner zusätzlichen Bauteile.

Weitere Merkmale und Vorteile der Erfindung ergeben sich aus der nachfolgenden Beschreibung anhand der Figuren. Dabei zeigen
- Fig. 1: in schematisch perspektivischer Darstellung ein erfindungsgemäßes Haushaltsgerät am Beispiel einer Haushaltsgeschirrspülmaschine, wobei sich die Gerätetür in einer teilgeöffneten Stellung befindet;
- Fig. 2: in einer Detailansicht ausschnittsweise die Geschirrspülmaschine nach Fig. 1;
- Fig. 3a und 3b: in einer Detailansicht ausschnittsweise ein erfindungsgemäßes Haushaltsgerät am Beispiel einer Haushaltsgeschirrspülmaschine gemäß einem zweiten Ausführungsbeispiel;
- Fig. 4: in schematischer Perspektivdarstellung ausschnittsweise die erste Kupplung der erfindungsgemäßen Kupplungseinrichtung;
- Fig. 5: in schematisch perspektivischer Ansicht ausschnittsweise die erste Kupplung der erfindungsgemäßen Kupplungseinrichtung;
- Fig. 6: in teilgeschnittener Draufsicht die erste Kupplung der erfindungsgemäßen Kupplungseinrichtung;
- Fig. 7 in: einer weiteren teilgeschnittenen Draufsicht die Kupplung nach Fig. 6;
- Fig. 8 in: teilgeschnittener Ansicht die erste Kupplung in einer ersten Stellung;
- Fig. 9 in: einer weiteren teilgeschnittenen Ansicht die Kupplung in der Stellung nach Fig. 8;
- Fig. 10 in: teilgeschnittener Ansicht die erste Kupplung in einer zweiten Stellung;
- Fig. 11: in einer weiteren teilgeschnittenen Ansicht die Kupplung in der Stellung nach Fig. 10;
- Fig. 12: in teilgeschnittener Ansicht die erste Kupplung in einer dritten Stellung;
- Fig. 13: in einer weiteren teilgeschnittenen Ansicht die erste Kupplung in der Stellung nach Fig. 12;
- Fig. 14: in schematisch perspektivischer Darstellung die erste Kupplung in einer ersten Stellung;
- Fig. 15: in einer weiteren perspektivischen Darstellung die erste Kupplung in der Stellung nach Fig. 14;
- Fig. 16: in schematisch perspektivischer Darstellung die erste Kupplung in einer zweiten Stellung;
- Fig. 17: in einer weiteren perspektivischen Ansicht die erste Kupplung in der Stellung nach Fig. 16;
- Fig. 18: in einer schematischen Explosionsdarstellung die zweite Kupplung der erfindungsgemäßen Kupplungseinrichtung;
- Fig. 19: in schematisch perspektivischer Darstellung die zweite Kupplung in einer ersten Stellung;
- Fig. 20: in einer schematischen Perspektivdarstellung die zweite Kupplung in einer zweiten Stellung;
- Fig. 21: in schematisch perspektivischer Darstellung die erfindungsgemäße Kupplungseinrichtung in einer Zusammenbausituation und
- Fig. 22: in schematisch perspektivischer Darstellung die Kupplungseinrichtung nach Fig. 21 ohne Gehäuse.

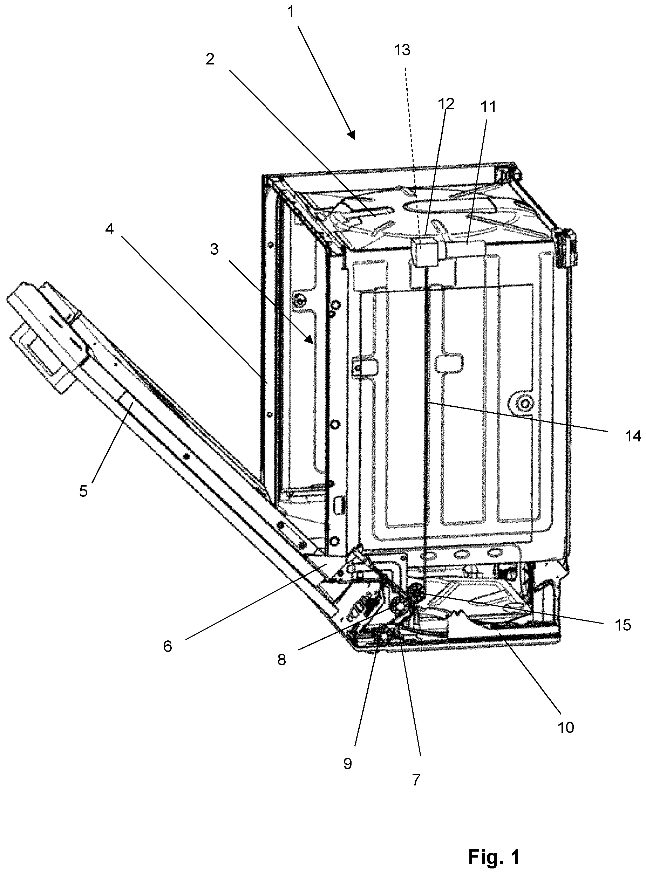

Fig. 1 lässt in schematisch perspektivischer Darstellung ein erfindungsgemäßes Haushaltsgerät am Beispiel einer Haushaltsgeschirrspülmaschine 1 erkennen.

Die Haushaltsgeschirrspülmaschine 1 verfügt über ein in den Figuren nicht näher dargestelltes Außengehäuse, das das Gerätegehäuse 2 beherbergt. Dabei stellt das Gerätegehäuse 2 einen Geräteraum 3 bereit, der über eine Beschickungsöffnung 4 zugänglich ist.

Die Haushaltsgeschirrspülmaschine 1 verfügt des Weiteren über eine um eine Schwenkachse verdrehbar gelagerte Gerätetür 5, die dem Verschluss der Beschickungsöffnung 4 dient. Dabei kann die Gerätetür 5 aus einer die Beschickungsöffnung 4 verschließenden Verschlussstellung in eine Offenstellung und umgekehrt überführt werden. Die Figuren 1 bis 3 zeigen die Gerätetür 5 in einer Offenstellung, in der die Beschickungsöffnung 4 teilgeöffnet ist.

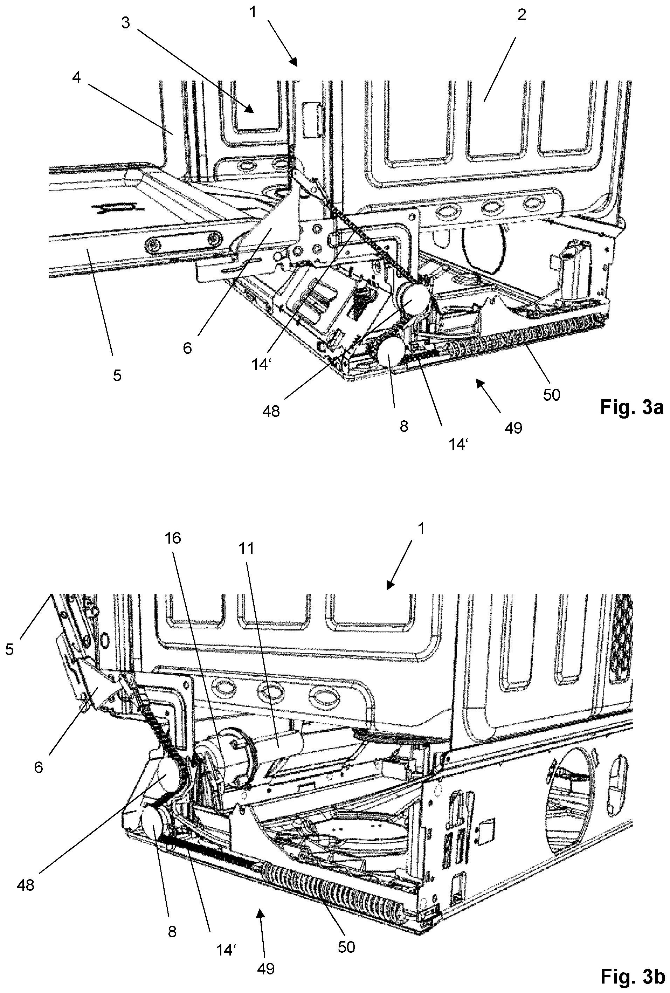

Wie insbesondere die Detailansicht nach Fig. 3 erkennen lässt, verfügt die Gerätetür 5 schwenkachsennah über einen dran angeordneten Hebel 6. Dabei sind je Seite der Gerätetür 5 ein Hebel 6 vorgesehen.

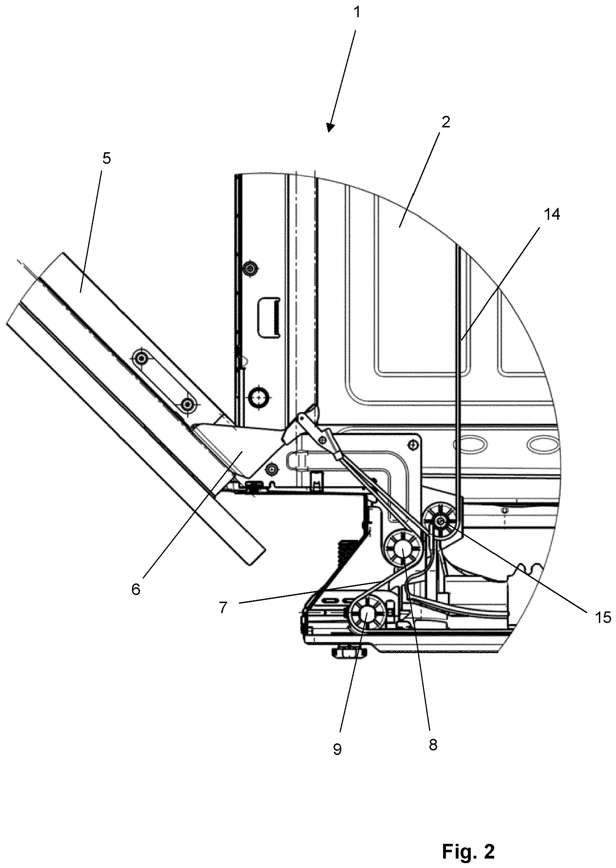

Am Hebel 6 ist im Ausführungsbeispiel gemäß Fig. 1 und 2 in an sich bekannter Weise ein Seilzug 7 einendseitig angeordnet, der über zwei Umlenkrollen 8 und 9 geführt und anderendseitig an einem gegenüber dem Gerätegehäuse 2 stationären Federelement angeordnet ist. Dieses Federelement ist in Fig. 1 und 2 nicht näher dargestellt und durch ein Blech 10 verdeckt.

Bei einer manuellen Öffnung der Gerätetür 5 durch einen Verwender wird der an den Hebeln 6 jeweils angeordnete Seilzug 7 auf Zug beansprucht, was zu einem Spannen des anderendseitig am jeweiligen Seilzug 7 angeordneten Federelements führt. Diese im Federelement gespeicherte Kraft wird bei einem Überführen der Gerätetür in die Verschlussstellung wieder freigesetzt was ein vereinfachtes Schließen der Gerätetür 5 ermöglicht. Die Konstruktion einer solchen Federkraftunterstützung der Gerätetür 5 ist aus dem Stand der Technik an sich bekannt, auch mit nur einem Federelement.

Die Haushaltsgeschirrspülmaschine 1 verfügt des Weiteren über eine Motoreinheit 11, die in Wirkverbindung mit der Gerätetür 5 steht und mittels welcher die Gerätetür 5 aus einer Offenstellung in eine die Beschickungsöffnung verschließenden Verschlussstellung überführbar ist. Es sind zu diesem Zweck im Ausführungsbeispiel von Fig. 1 und 2 als Kraftübertragungsmittel ein weiterer Seilzug 14 sowie als Antriebsmittel eine von einem Gehäuse 12 aufgenommene Seiltrommel 13 vorgesehen, auf die der Seilzug 14 zumindest teilweise aufwickelbar ist.

Wie die Figuren 1 und 2 erkennen lassen, ist der weitere Seilzug 14 einendseitig an einem Hebel 6 der Gerätetür 5 angeordnet. Ausgehend vom Hebel 6 ist der weitere Seilzug 14 um eine Umlenkrolle 15 bis hin zur Seiltrommel 13 geführt, mit welcher der Seilzug 14 anderendseitig gekoppelt ist. Bei einer Verdrehbewegung der Seiltrommel 13 in Aufwickelrichtung erfolgt eine Zugbelastung des Seilzugs 14, der nicht nur ein Aufwickeln des Seilzugs 14 auf die Seiltrommel 13 bewirkt, sondern auch eine Verdrehbewegung der Gerätetür 5 in Richtung der Verschlussstellung.

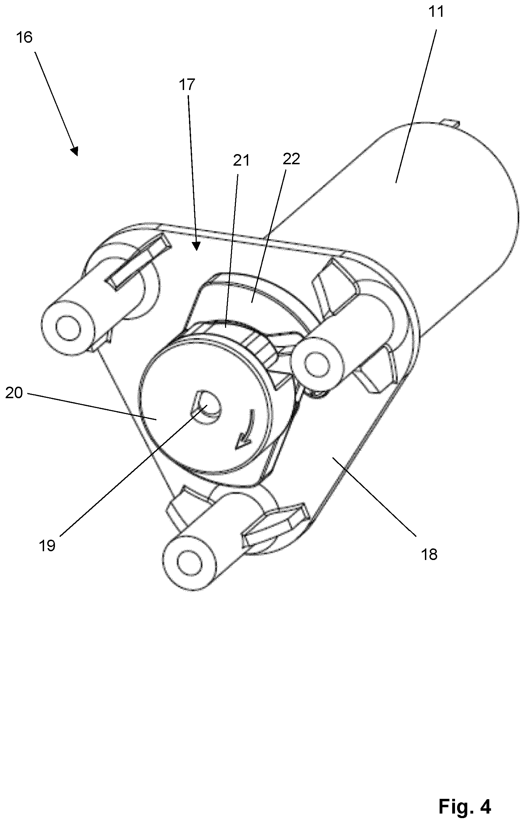

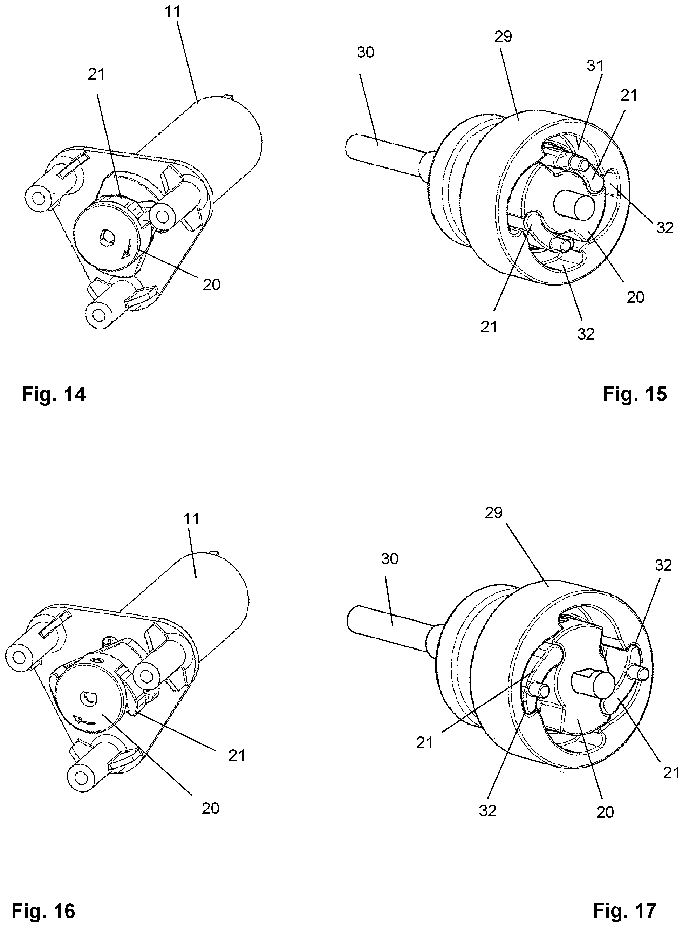

In die Wirkverbindung zwischen Motoreinheit 11 und Gerätetür 5 ist eine in den Figuren 4 bis 22 näher beschriebenen Kupplungseinrichtung 16 integriert, die antriebsseitig mit der Motoreinheit 11 und abtriebsseitig mit der Gerätetür 5 in Wirkverbindung steht. Im Betriebsfall der Motoreinheit 11 erfolgt mithin eine Drehmomentübertragung von der Motoreinheit 11 auf die Gerätetür 5 unter Zwischenschaltung der Kupplungseinrichtung 16.

Ein zu den Figuren 1 und 2 alternatives, zweites Ausführungsbeispiel zeigen die Figuren 3a und 3b. Als Kraftübertragungsmittel wird darin statt des Seilzuges 14 ein Zahnriemen 14' eingesetzt. Dieser ist einendseitig an dem jeweiligen Hebel 6 angeordnet, ist über ein als Zahnrad 48 ausgebildetes Antriebsmittel und eine Umlenkrolle 8 geführt und ist anderendseitig an einem gegenüber dem Gerätegehäuse 2 stationären Federelement 50 angeordnet. Dieses Federelement 50 ist in den Zeichnungen zumindest teilweise durch einen Blechabschnitt abgedeckt.

Bei einer manuellen Öffnung der Gerätetür 5 durch einen Verwender wird bei diesem Ausführungsbeispiel der an den Hebeln 6 jeweils angeordnete Zahnriemen 14' auf Zug beansprucht, was zu einem Spannen des anderendseitig am jeweiligen Zahnriemen 14' angeordneten Federelements 50 führt. Es ist so bezüglich der Gerätetür 5 ein Gewichtsausgleich gegeben, womit ein unkontrolliertes Herunterverschwenken der Gerätetür 5 verhindert ist. Die in den Federelementen 50 gespeicherte Kraft wird bei einem Überführen der Gerätetür 5 zurück in die Verschlussstellung wieder freigesetzt, was ein vereinfachtes Schließen der Gerätetür 5 ermöglicht. In ihrer Kombination bilden der Zahnriemen 14' und das Federelement 50 die Federmechanik 49 aus.

Bei diesem zweiten Ausführungsbeispiel kann die Motoreinheit 11, welche in Wirkverbindung mit der Gerätetür 5 steht und ein motorangetriebenes Verschwenken der Gerätetür 5 aus einer Offenstellung in eine Verschlussstellung gestattet, beispielsweise wie in Fig. 3b gezeigt im Sockelbereich der Haushaltsgeschirrspülmaschine 1 angeordnet sein. Im Betriebsfall der Motoreinheit 11 treibt diese unter Zwischenschaltung einer Kupplungseinrichtung 16 das Zahnrad 48 an, das mit dem Zahnriemen 14' formschlüssig in Eingriff steht. Ein motorangetriebenes Verdrehen des Zahnrades 48 führt mithin zu einer Zugbeanspruchung des Zahnriemens 14', infolge dessen es zu einer Kraftbeaufschlagung der Gerätetür 5 mit dem Ergebnis kommt, dass diese im Uhrzeigersinn in Richtung auf die Beschickungsöffnung 4 verdreht. Aufgrund des Formschlusses zwischen Zahnrad 48 und Zahnriemen 14' kann kein Schlupf auftreten, so dass die Gerätetür 5 sicher und unabhängig vom Türgewicht und der Türposition über den gesamten Schwenkbereich bewegt werden kann.

In den Figuren 4 bis 20 wird die Kupplungseinrichtung 16, welche sowohl für das Ausführungsbeispiel gemäß den Figuren 1 und 2 als auch für das Ausführungsbeispiel gemäß den Figuren 3a und 3b eingesetzt werden kann, näher beschrieben. Diese weist erfindungsgemäß eine Kupplung 17 auf, die schaltbar ausgebildet ist und aus einer entkuppelten Stellung in eine gekuppelte Stellung und umgekehrt überführbar ist, wobei die Kupplung 17 eingerichtet ist, im Betriebsfall der Motoreinheit 11 eine automatische Schaltung aus der entkuppelten Stellung in die gekuppelte Stellung zu bewirken.

Wie dies beispielsweise Fig. 4 erkennen lässt, verfügt die Kupplung 17 antriebsseitig über eine Motorplatte 18, an welcher die Motoreinheit 11 beispielsweise durch Verschraubung angeordnet ist. Die Motoreinheit 11 verfügt über eine Motorwelle 19, die eine entsprechende Öffnung in der Motorplatte 18 durchragt. Auf der Motorwelle 19 ist verdrehfest ein Drehteil 20 angeordnet. Dieses verdreht im Betriebsfall der Motoreinheit 11 in Entsprechung einer Verdrehbewegung der Motorwelle 19.

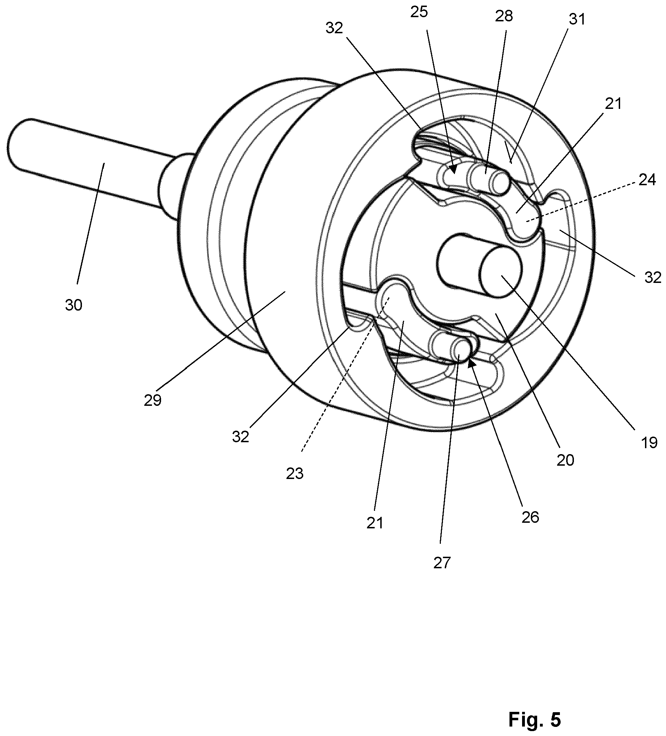

Fig. 5 lässt eine rückwärtige Ansicht des Drehteils 20 erkennen. Wie sich aus dieser Darstellung ergibt, sind am Drehteil 20 zwei Klemmstücke 21 angeordnet, und zwar verdrehbar. Dabei ist das eine Klemmstück 21 um eine Schwenkachse 23 und das andere Klemmstück 21 um eine Schwenkachse 24 jeweils relativ verschwenkbar zum Drehteil 20 am Drehteil 20 angeordnet. Anstelle der beiden gezeigten Klemmstücke 21 können alternativ auch mehr Klemmstücke 21 vorgesehen sein.

Wie sich dies insbesondere aus einer Zusammenschau der Figuren 4, 6 und 7 ergibt, verfügt die Kupplung 17 des Weiteren über ein Führungsmittel 22. Dieses stellt zwei Kulissenführungen 34 und 35 bereit.

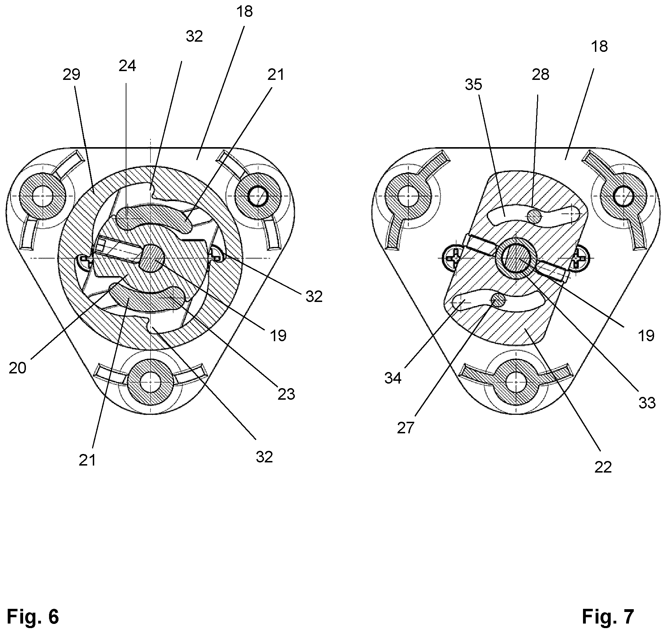

Die Klemmstücke 21 des Drehteils 20 verfügen jeweils über Zapfen 27 bzw. 28, die im jeweiligen schwenkachsenentfernten Endabschnitt 25 bzw. 26 angeordnet sind, wie dies insbesondere die Darstellung nach Fig. 5 erkennen lässt. Im zusammengebauten Zustand der Kupplung 17 greifen diese Zapfen 27 bzw. 28 in die jeweils zugeordneten Führungskulissen 34 und 35 ein, wie dies insbesondere Fig. 7 erkennen lässt.

Das Führungsmittel 22 ist auf einem von der Motorwelle 19 durchragten Lagerbund 33 verdrehbar gelagert, und zwar unter Ausbildung eines Reibsitzes. Eine Verdrehbewegung des Führungsmittel 22 findet mithin erst dann statt, wenn eine solche Verdrehkraft auf das Führungsmittel 22 einwirkt, die die zwischen Führungsmittel 22 und Lagerbund 33 bestehende Reibung bzw. die dadurch verursachte Reibkraft übersteigt.

Aus Fig. 5 ergibt sich des Weiteren, dass die Kupplung 17 über ein Kupplungsgehäuse 29 verfügt. Dieses Kupplungsgehäuse 29 nimmt das Drehteil 20 mit den daran angeordneten Klemmstücken 21 auf.

Das Kupplungsgehäuse 29 stellt eine Innenkontur 31 bereit, die mit den Klemmstücken 21 zusammenwirkt. Dabei weist die Innenkontur 31 zu den schwenkachsenentfernten Endabschnitten 25 und 26 der Klemmstücke 21 korrespondierend ausgebildete Aufnahmemulden 32 auf. In diese Aufnahmemulden 32 können, wie dies im Weiteren noch näher beschrieben werden wird, die Klemmstücke 21 eintauchen.

Abtriebsseitig ist am Kupplungsgehäuse 29 eine Abtriebswelle 30 angeordnet, wie dies ebenfalls Fig. 5 erkennen lässt. Diese Abtriebswelle 30 steht in Wirkverbindung mit dem Antriebsmittel, etwa der Seiltrommel 13.

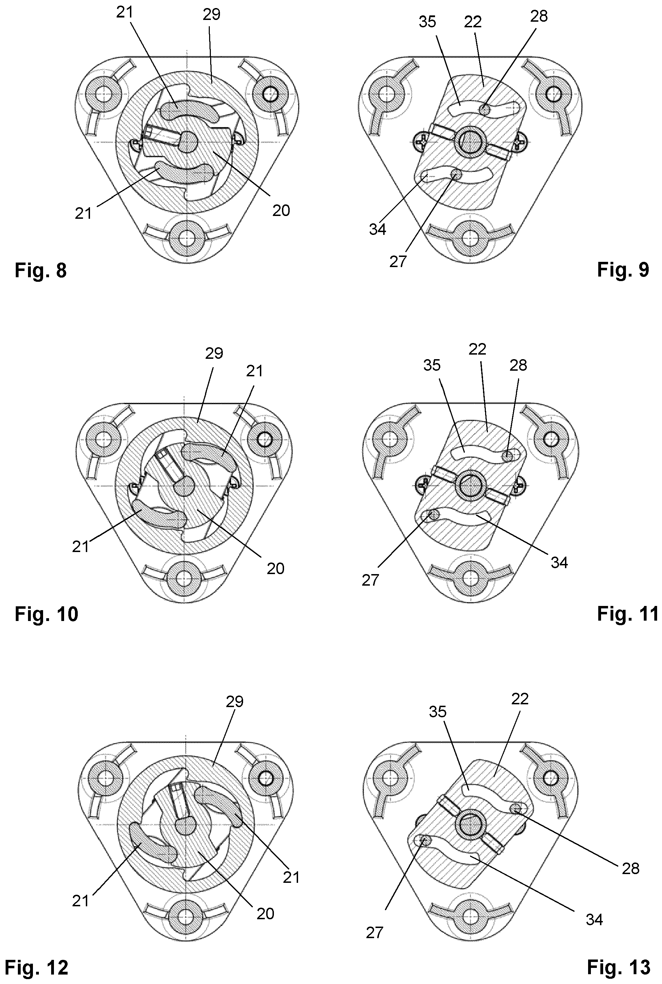

Die Funktionsweise der vorbeschriebenen Kupplung 17 ergibt sich aus einer Zusammenschau der Figuren 8 bis 17.

Die Figuren 8, 9 und 14 sowie 15 zeigen die Kupplung 17 in entkuppelter, d.h. ausgekuppelter Stellung. In dieser Stellung ist das Kupplungsgehäuse 29 gegenüber dem Drehteil 20 frei verdrehbar. In dieser Stellung der Kupplung 17 erfolgt eine manuelle Betätigung der Gerätetür 5. Dabei kann die Gerätetür 5 sowohl geöffnet als auch geschlossen werden. Die Wirkverbindung zwischen Kupplungsgehäuse 29 und dem Antriebsmittel, etwa der Seiltrommel 13, bewirkt bei einem manuellen Verfahren der Gerätetür, dass das Kupplungsgehäuse 29 in Relation zum Drehteil 20 verdreht.

Sofern sich die Gerätetür 5 in geöffneter Stellung befindet und ein Verschließen der Gerätetür 5 mittels der Motoreinheit 11 erfolgen soll, ist die Motoreinheit 11 verwenderseitig zu starten. Infolge eines Starts der Motoreinheit 11 verdreht die Motorwelle 19 und damit auch das darauf verdrehfest angebrachte Drehteil 20. Infolge einer Verdrehbewegung des Drehteils 20 verdrehen auch die Klemmstücke 21 zusammen mit dem Drehteil, d.h. um die von der Motorwelle 19 bereitgestellte Drehachse.

Da die Klemmstücke 21 mit ihren schwenkachsenentfernten Endabschnitten 25 bzw. 26 jeweils unter Zwischenordnung der jeweiligen Zapfen 27 bzw. 28 in den Kulissenführungen 34 und 35 des Führungsmittels 22 gehalten sind, wird durch die Verdrehbewegung des Drehteils 20 die jeweilige Verdrehbewegung der Klemmstücke 21 erreicht, und zwar relativ zum Drehteil 20 um die jeweiligen Drehachsen 23 und 24. Diesen Sachzusammenhang lassen die Figuren 10 und 11 erkennen. Während dieses Anfahrvorgangs verdreht das Führungsmittel 22 noch nicht, da dieses aufgrund ihres Reibsitzes noch feststehend auf dem Lagerbund 33 gehalten ist.

Sobald die Klemmstücke 21 ihre verdrehte Endposition in Relation zum Drehteil 20 erreicht haben, greifen sie mit ihren Endabschnitten 25 bzw. 26 in entsprechende Aufnahmemulden 32 der Innenkontur 31 des Kupplungsgehäuses 29 ein, wie dies die Figuren 12 und 13 bzw. 16 und 17 erkennen lassen. In dieser Position ist eine kraftübertragende Kupplung zwischen dem Drehteil 20 und dem Kupplungsgehäuse 29 erreicht. Die Kupplung 17 ist mithin eingekuppelt bzw. gekuppelt, so dass eine Drehmomentübertragung vom motorangetriebenen Drehteil 20 auf das Kupplungsgehäuse 29 und damit auf die Abtriebswelle 30 stattfinden kann. Im Ergebnis erfolgt ein motorangetriebenes Verdrehen der Seiltrommel 13 oder des Zahnrades 48 mit dem Effekt, dass ein motorangetriebenes Schließen der Gerätetür 5 stattfindet.

Von besonderem Vorteil der vorbeschriebenen Konstruktion ist, dass es für ein Einkuppeln der Kupplung 17 keiner besonderen Aktorik bedarf. Das Einkuppeln erfolgt automatisch bei Betriebsaufnahme der Motoreinheit 11. Sobald also die Motoreinheit 11 startet, erfolgt in vorbeschriebener Weise eine Verdrehbewegung des Drehteils 20, was dann im Weiteren zu einem formschlüssigen Eingriff der Klemmstücke 21 in die zugehörigen Aufnahmemulden 32 führt.

Von Vorteil der vorbeschriebenen Kupplung 17 ist des Weiteren, dass eine manuelle Nachführung der Gerätetür, d.h. ein verwenderseitiges Anschieben der Gerätetür 5 nach wie vor möglich ist. Denn sollte trotz Motorbetrieb ein manuelles Nachführen der Gerätetür 5 stattfinden, so verdreht das Kupplungsgehäuse 29 im Uhrzeigersinn durch den manuellen Eingriff schneller als das motorangetriebene Drehteil 20. In der Konsequenz klinken die Klemmstücke 21 aus den jeweils zugehörigen Aufnahmemulden 32 aus. Eine zusätzliche Kraft bzw. Drehmomentbelastung der Kupplung 17 oder der Motoreinheit 11 durch ein manuelles Anschieben der Gerätetür 5 ist also unterbunden. Sollte dann im Weiteren eine manuelle Unterstützung wieder wegfallen, greifen die Klemmstücke 31 erneut in jeweils zugehörige Aufnahmemulden 32 ein, so dass ein fortgesetzter Motorbetrieb stattfinden kann.

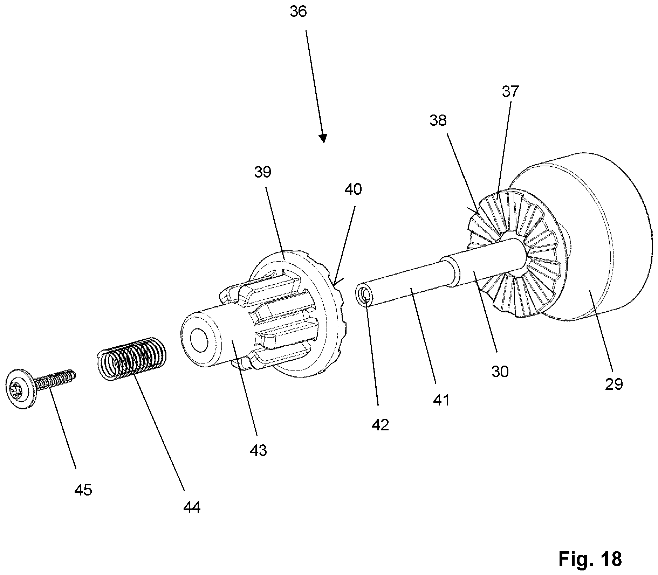

Die Kupplungseinrichtung 16 verfügt über eine zweite Kupplung in Form einer Klauenkupplung 36, wie dies eine Zusammenschau der Figuren 18 bis 20 erkennen lässt. Dabei dient die Klauenkupplung 36 als Rutschkupplung und soll für den Fall einer Türblockade eine mechanische Unterbrechung des Antriebsstrangs sicherstellen.

Die Klauenkupplung 36 verfügt über ein erstes Kupplungsteil 37 und ein zweites Kupplungsteil 39, die jeweils entsprechende Wirkoberflächen 38 und 40 bereitstellen. Das erste Kupplungsteil 37 ist verdrehfest auf der Antriebswelle 30 angeordnet. Bei einer Verdrehbewegung des Kupplungsgehäuses 29 verdreht mithin auch das erste Kupplungsteil 37 der Klauenkupplung 36.

Auf der Abtriebswelle 30 verdrehbar gelagert ist ein Verzahnungsteil 43 angeordnet, das einstückig damit ausgebildet das zweite Kupplungsteil 39 bereitstellt.

An die Abtriebswelle 30 schließt sich ein Hülsenfortsatz 41 an, der stirnseitig eine Gewindebohrung 42 bereitstellt. Im endmontierten Zustand greift in diese Gewindebohrung 42 eine Schraube 45 ein, an der sich eine gegen das Verzahnungsteil 43 drückende Feder 44 abstützt.

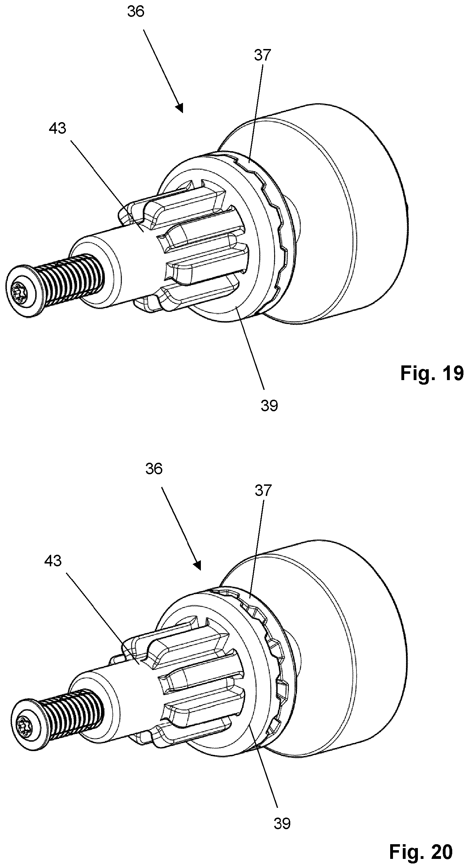

Im normalen Betriebsfall greifen die Wirkoberflächen 38 und 40 der Kupplungsteile 37 und 39 ineinander, wie in Fig. 19 dargestellt. Dabei steht das das zweite Kupplungsteil 39 bereitstellende Verzahnungsteil 43 unter Federvorspannung, wird mithin gegen das erste Kupplungsteil 37 gedrückt.

Das Verzahnungsteil 43 dient entweder selbst als Seiltrommel 13 zur Aufnahme des Seilzugs 14 bzw. Zahnrad 48 zur Aufnahme des Zahnriemens 14' oder als Koppelelement zur Aufnahme einer separat ausgebildeten Seiltrommel 13 oder eines separat ausgebildeten Zahnrades 48. In jedem Fall wirkt bei einer blockierten Gerätetür 5 über den Seilzug 14 bzw. den Zahnriemen 14' eine Gegenkraft auf das Verzahnungsteil 43 ein. Ist diese Gegenkraft größer als die durch die Feder 44 bereitgestellte Zusammendrückkraft der beiden Kupplungsteile 37 und 39, so kommt es zu einem Durchrutschen der Klauenkupplung 36, indem die Kupplungsteile 37 und 39 außer Eingriff kommen, wie dies in Fig. 20 dargestellt ist. Der Abtriebsstrang zwischen Motoreinheit 11 und Seiltrommel 13 bzw. Zahnrad 48 ist insofern unterbrochen, so dass trotz eines Betriebs der Motoreinheit 11 eine Verdrehbewegung der Seiltrommel 13 bzw. des Zahnrades 48 unterbleibt.

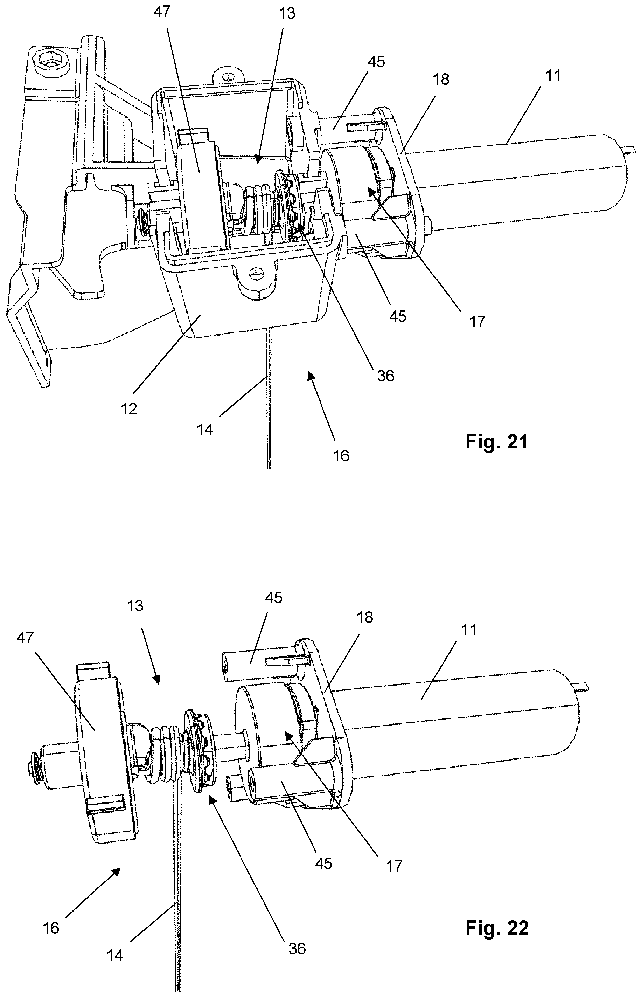

Die Figuren 21 und 22 lassen die erfindungsgemäße Kupplungseinrichtung 16 im zusammengebauten Zustand und insbesondere in Zusammenspiel mit einer Seiltrommel 13 und einem Seilzug 14 entsprechend dem Ausführungsbeispiel gemäß den Figuren 1 und 2 erkennen, wobei Fig. 21 auch das Gehäuse 12 zeigt, das der besseren Übersicht wegen in Fig. 22 nicht dargestellt ist.

Die die Motoreinheit 11 tragende Motorplatte 18 ist unter Zwischenordnung entsprechender Dorne 45 außenseitig am Gehäuse 12 angeordnet. Die erste Kupplung 17 erstreckt sich abtriebsseitig zwischen der Motorplatte 18 und dem Gehäuse 12. Innerhalb des Gehäuses 12 sind die sich abtriebsseitig an die erste Kupplung 17 anschließende zweite Kupplung 36 sowie die Seiltrommel 13 angeordnet. Dabei wirkt die Seiltrommel 13 mit einem federelastischen Spannmittel 47 zusammen, das insbesondere bei einer manuellen Türschließung dafür Sorge trägt, dass sich die Seiltrommel 13 zur Aufwicklung des Seilzuges 14 verdreht.

Im Falle eines Betriebs der Motoreinheit 11 erfolgt in schon vorbeschriebener Weise eine automatische Kupplung der Kupplung 17, so dass das Motordrehmoment auf die Seiltrommel 13 zur Aufwicklung des Seilzugs 14 übertragen wird. Für den Fall einer Blockade der Gerätetür 5 wird der Antriebsstrang mechanisch infolge eines Durchrutschens der Klauenkupplung 36 unterbrochen.

Am Ende des Bewegungsablaufes wird der Motor der Motoreinheit abgeschaltet und kurzzeitig in entgegengesetzter Drehrichtung betrieben. Folglich klinken die Klemmstücke 21 aus den jeweils zugehörigen Aufnahmemulden 32 aus und verbleiben schließlich in der vollständig eingefahrenen Position.

### Bezugszeichen

- 1: Geschirrspülmaschine
- 2: Gerätegehäuse
- 3: Geräteraum
- 4: Beschickungsöffnung
- 5: Gerätetür
- 6: Hebel
- 7: Seilzug
- 8: Umlenkrolle
- 9: Umlenkrolle
- 10: Blech
- 11: Motoreinheit
- 12: Gehäuse
- 13: Seiltrommel
- 14: Seilzug; 14' Zahnriemen
- 15: Umlenkrolle
- 16: Kupplungseinrichtung
- 17: Kupplung
- 18: Motorplatte
- 19: Motorwelle
- 20: Drehteil
- 21: Klemmstück
- 22: Führungsmittel
- 23: Schwenkachse
- 24: Schwenkachse
- 25: Endabschnitt
- 26: Endabschnitt
- 27: Zapfen
- 28: Zapfen
- 29: Kupplungsgehäuse
- 30: Abtriebswelle
- 31: Innenkontur
- 32: Aufnahmemulde
- 33: Lagerbund
- 34: Kulissenführung
- 35: Kulissenführung
- 36: Klauenkupplung
- 37: erstes Kupplungsteil
- 38: Wirkoberfläche
- 39: zweites Kupplungsteil
- 40: Wirkoberfläche
- 41: Hülsenfortsatz
- 42: Gewindebohrung
- 43: Verzahnungsteil
- 44: Feder
- 45: Schraube
- 46: Dom
- 47: Spannmittel
- 48: Zahnrad
- 49: Federmechanik
- 50: Federelement

## Patentansprüche

1. Haushaltsgerät, insbesondere wasserführendes Haushaltsgerät, mit einem einen Geräteraum (3) bereitstellenden Gerätegehäuse (2), das für einen Zugriff auf den Geräteraum (3) eine Beschickungsöffnung (4) aufweist, mit einer um eine Schwenkachse verdrehbar gelagerten Gerätetür (5) für einen Verschluss der Beschickungsöffnung (4), mit einer Motoreinheit (11), die in Wirkverbindung mit der Gerätetür (5) steht und mittels welcher die Gerätetür (5) aus einer Offenstellung in eine die Beschickungsöffnung (4) verschließenden Verschlussstellung überführbar ist, und mit einer zwischen Motoreinheit (11) und Gerätetür (5) angeordneten Kupplungseinrichtung (16), die antriebsseitig mit der Motoreinheit (11) und abtriebsseitig mit der Gerätetür (5) in Wirkverbindung steht, wobei die Kupplungseinrichtung (16) eine erste Kupplung (17) aufweist, die schaltbar ausgebildet ist und aus einer entkuppelten Stellung in eine gekuppelte Stellung und umgekehrt überführbar ist, **dadurch gekennzeichnet, dass** die erste Kupplung (17) eingerichtet ist, im Betriebsfall der Motoreinheit (11)
eine automatische Schaltung aus der entkuppelten Stellung in die gekuppelte Stellung zu bewirken, und dass die Kupplungseinrichtung (16) eine zweite Kupplung aufweist, die als Überlastkupplung ausgebildet ist.

2. Haushaltsgerät nach Anspruch 1,
**dadurch gekennzeichnet, dass**
die Wirkverbindung zwischen Motoreinheit (11) und Gerätetür (5) ein Kraftübertragungsmittel (14,14'), insbesondere einen Seilzug (14) als Kraftübertragungsmittel, aufweist.

3. Haushaltsgerät nach Anspruch 2,
**dadurch gekennzeichnet, dass**
das Kraftübertragungsmittel (14,14'), insbesondere der Seilzug (14), einendseitig an einem Hebel (6) der Gerätetür (5) angeordnet ist.

4. Haushaltsgerät nach Anspruch 2 oder 3,
**dadurch gekennzeichnet, dass**
der Seilzug (14) anderendseitig an einer verdrehbar gelagerten Seiltrommel (13) angeordnet ist, auf die der Seilzug (14) zumindest teilweise aufwickelbar ist.

5. Haushaltsgerät nach einem der vorhergehenden Ansprüche,
**dadurch gekennzeichnet, dass**
die Motoreinheit (11) unter Zwischenschaltung der Kupplungseinrichtung (16) in Wirkverbindung mit einem Antriebsmittel (13, 48), insbesondere einer Seiltrommel (13) steht, um im Betriebsfall der Motoreinheit (11) ein Verdrehen des Antriebsmittel (13, 48), insbesondere der Seiltrommel (13), zu bewirken.

6. Haushaltsgerät nach einem der vorhergehenden Ansprüche,
**dadurch gekennzeichnet, dass**
die erste Kupplung (17) ein verdrehfest auf einer Motorwelle (19) der Motoreinheit (11) angeordnetes Drehteil (20) aufweist, das ein um eine Schwenkachse (23, 24) verdrehbar daran angeordnetes Klemmstück (21) trägt.

7. Haushaltsgerät nach Anspruch 6,
**dadurch gekennzeichnet, dass**
das Klemmstück (21) mit einem schwenkachsenentfernten Endabschnitt (25, 26) mit einer von einem Führungsmittel (22) bereitgestellten Kulissenführung (34, 35) zusammenwirkt.

8. Haushaltsgerät nach Anspruch 7,
**dadurch gekennzeichnet, dass**
das Führungsmittel (22) auf einem von der Motorwelle (19) durchgriffenen Lagerbund (33) unter Ausbildung eines Reibsitzes verdrehbar gelagert ist.

9. Haushaltsgerät nach einem der vorhergehenden Ansprüche 6 bis 8,
**dadurch gekennzeichnet, dass**
die erste Kupplung (17) ein das Drehteil (20) zumindest teilweise aufnehmendes Kupplungsgehäuse (29) aufweist, das eine mit dem Klemmstück (21) zusammenwirkende Innenkontur (31) aufweist.

10. Haushaltsgerät nach Anspruch 9,
**dadurch gekennzeichnet, dass**
die Innenkontur (31) eine zum schwenkachsenentfernten Endabschnitt (25, 26) des Klemmstücks (21) korrespondierend ausgebildete Aufnahmemulde (32) aufweist.

11. Haushaltsgerät nach Anspruch 9 oder 10,
**dadurch gekennzeichnet, dass**
das Kupplungsgehäuse (29) eine Abtriebswelle (30) bereitstellt.

12. Haushaltsgerät nach einem der vorhergehenden Ansprüche,
**dadurch gekennzeichnet, dass**
die zweite Kupplung ein erstes Kupplungsteil (37) und ein zweites Kupplungsteil (39) aufweist, wobei das zweite Kupplungsteil (39) unter Federvorspannung am ersten Kupplungsteil (37) anliegt.

13. Haushaltsgerät nach Anspruch 12,
**dadurch gekennzeichnet, dass**
das erste Kupplungsteil (37) verdrehfest auf der Abtriebswelle (30) der ersten Kupplung (17) angeordnet ist.

14. Haushaltsgerät nach einem der vorhergehenden Ansprüche 11 bis 13, **dadurch gekennzeichnet, dass** die zweite Kupplung ein Klauenkupplung (36) ist.

## Claims

1. Domestic appliance, in particular a water-conducting domestic appliance, which has an appliance housing (2) which provides an appliance space (3), the appliance housing having a feed opening (4) for access to the appliance space (3), which domestic appliance also has an appliance door (5) mounted rotatably about a pivot axis for closing the feed opening (4), which domestic appliance also has a motor unit (11) which is operatively connected to the appliance door (5) and by means of which the appliance door (5) can be transferred from an open position into a closed position which closes the feed opening (4), and which domestic appliance also has a coupling device (16) arranged between the motor unit (11) and the appliance door (5), which coupling device is operatively connected to the motor unit (11) on the drive side and to the appliance door (5) on the output side, the coupling device (16) having a first coupling (17) which is designed to be switchable and can be transferred from an uncoupled position to a coupled position and vice versa,
**characterised in that**
the first coupling (17) is configured to effect an automatic switching from the uncoupled position to the coupled position when the motor unit (11) is in operation, **and in that** the coupling device (16) has a second coupling which is designed as an overload coupling.

2. Domestic appliance according to claim 1,
**characterised in that**
the operative connection between the motor unit (11) and the appliance door (5) has a force transmission means (14,14'), in particular a control cable (14) as a force transmission means.

3. Domestic appliance according to claim 2,
**characterised in that**
the force transmission means (14,14'), in particular the control cable (14), is arranged at one end on a lever (6) of the appliance door (5).

4. Domestic appliance according to claim 2 or claim 3,
**characterised in that**
the control cable (14) is arranged at the other end on a rotatably mounted cable drum (13) onto which the control cable (14) can be at least partially wound.

5. Domestic appliance according to any of the preceding claims,
**characterised in that**
the motor unit (11) is operatively connected to a drive means (13, 48), in particular a cable drum (13), with the interposition of the coupling device (16) in order to effect a rotation of the drive means (13, 48), in particular the cable drum (13), when the motor unit (11) is in operation.

6. Domestic appliance according to any of the preceding claims,
**characterised in that**
the first coupling (17) has a rotating member (20) arranged non-rotatably on a motor shaft (19) of the motor unit (11), which rotating member carries a clamping piece (21) arranged rotatably thereon about a pivot axis (23, 24).

7. Domestic appliance according to claim 6,
**characterised in that**
the clamping piece (21) interacts, by means of an end portion (25, 26) remote from the pivot axis, with a slotted guide (34, 35) provided by a guide means (22).

8. Domestic appliance according to claim 7,
**characterised in that**
the guide means (22) is rotatably mounted on a bearing collar (33) through which the motor shaft (19) passes, forming a friction fit.

9. Domestic appliance according to any of the preceding claims 6 to 8,
**characterised in that**
the coupling (17) has a coupling housing (29) which at least partially receives the rotating member (20) and which has an inner contour (31) which interacts with the clamping piece (21).

10. Domestic appliance according to claim 9,
**characterised in that**
the inner contour (31) has a receiving recess (32) designed to correspond to the end portion (25, 26) of the clamping piece (21), which end portion is remote from the pivot axis.

11. Domestic appliance according to claim 9 or claim 10,
**characterised in that**
the coupling housing (29) provides an output shaft (30).

12. Domestic appliance according to any of the preceding claims,
**characterised in that**
the second coupling has a first coupling member (37) and a second coupling member (39), the second coupling member (39) abutting the first coupling member (37) under spring pretension.

13. Domestic appliance according to claim 12,
**characterised in that**
the first coupling member (37) is arranged non-rotatably on the output shaft (30) of the first coupling (17).

14. Domestic appliance according to any of the preceding claims 11 to 13,
**characterised in that** the second coupling is a claw coupling (36).

## Revendications

1. Appareil électroménager, en particulier appareil électroménager conducteur d'eau, comportant un boîtier d'appareil (2) fournissant un espace d'appareil (3), lequel boîtier d'appareil présente une ouverture de chargement (4) pour un accès à l'espace d'appareil (3), comportant une porte d'appareil (5) montée de manière à pouvoir tourner autour d'un axe de pivotement pour une fermeture de l'ouverture de chargement (4), comportant une unité formant moteur (11) qui est en liaison active avec la porte d'appareil (5) et au moyen de laquelle la porte d'appareil (5) peut être transférée d'une position ouverte à une position fermée fermant l'ouverture de chargement (4), et comportant un dispositif d'accouplement (16) qui est disposé entre l'unité formant moteur (11) et la porte d'appareil (5) et est en liaison active côté entraînement avec l'unité formant moteur (11) et côté sortie avec la porte d'appareil (5), dans lequel le dispositif d'accouplement (16) présente un premier accouplement (17) qui est conçu de manière à pouvoir commuter et qui peut être transféré d'une position désaccouplée à une position accouplée et inversement,
**caractérisé en ce que**
le premier accouplement (17) est conçu pour provoquer, en cas de fonctionnement de l'unité formant moteur (11), une commutation automatique de la position désaccouplée à la position accouplée, **et en ce que** le dispositif d'accouplement (16) présente un second accouplement qui est conçu comme un accouplement de surcharge.

2. Appareil électroménager selon la revendication 1,
**caractérisé en ce que**
la liaison active entre l'unité formant moteur (11) et la porte d'appareil (5) présente un moyen de transmission de force (14, 14'), en particulier un câble Bowden (14) comme moyen de transmission de force.

3. Appareil électroménager selon la revendication 2,
**caractérisé en ce que**
le moyen de transmission de force (14, 14'), en particulier le câble Bowden (14), est disposé à une extrémité sur un levier (6) de la porte d'appareil (5).

4. Appareil électroménager selon la revendication 2 ou 3,
**caractérisé en ce que**
le câble Bowden (14) est disposé à l'autre extrémité sur un tambour de câble (13) monté de manière à pouvoir tourner, sur lequel tambour de câble le câble Bowden (14) peut être enroulé au moins partiellement.

5. Appareil électroménager selon l'une des revendications précédentes,
**caractérisé en ce que**
l'unité formant moteur (11) est en liaison active avec un moyen d'entraînement (13, 48), en particulier un tambour de câble (13), avec interposition du dispositif d'accouplement (16), afin de provoquer, en cas de fonctionnement de l'unité formant moteur (11), une rotation du moyen d'entraînement (13, 48), en particulier du tambour de câble (13).

6. Appareil électroménager selon l'une des revendications précédentes,
**caractérisé en ce que**
le premier accouplement (17) présente une partie rotative (20) disposée de manière solidaire en rotation sur un arbre de moteur (19) de l'unité formant moteur (11), laquelle partie rotative supporte une pièce de serrage (21) disposée sur celle-ci de manière à pouvoir tourner autour d'un axe de pivotement (23, 24).

7. Appareil électroménager selon la revendication 6,
**caractérisé en ce que**
la pièce de serrage (21) coopère, avec une section d'extrémité (25, 26) éloignée de l'axe de pivotement, avec un guide à coulisse (34, 35) fourni par un moyen de guidage (22).

8. Appareil électroménager selon la revendication 7,
**caractérisé en ce que**
le moyen de guidage (22) est monté de manière à pouvoir tourner sur un collet de palier (33) traversé par l'arbre de moteur (19) en formant un ajustement par friction.

9. Appareil électroménager selon l'une des revendications précédentes 6 à 8,
**caractérisé en ce que**
le premier accouplement (17) présente un boîtier d'accouplement (29) recevant au moins partiellement la partie rotative (20), lequel boîtier d'accouplement présente un contour intérieur (31) coopérant avec la pièce de serrage (21).

10. Appareil électroménager selon la revendication 9,
**caractérisé en ce que**
le contour intérieur (31) présente une cavité de réception (32) réalisée de manière à correspondre à la section d'extrémité (25, 26) éloignée de l'axe de pivotement de la pièce de serrage (21).

11. Appareil électroménager selon la revendication 9 ou 10,
**caractérisé en ce que**
le boîtier d'accouplement (29) fournit un arbre de sortie (30).

12. Appareil électroménager selon l'une des revendications précédentes,
**caractérisé en ce que**
le second accouplement présente une première partie d'accouplement (37) et une seconde partie d'accouplement (39), dans lequel la seconde partie d'accouplement (39) s'appuie sur la première partie d'accouplement (37) sous précontrainte par ressort.

13. Appareil électroménager selon la revendication 12,
**caractérisé en ce que**
la première partie d'accouplement (37) est disposée de manière solidaire en rotation sur l'arbre de sortie (30) du premier accouplement (17).

14. Appareil électroménager selon l'une des revendications précédentes 11 à 13,
**caractérisé en ce que** le second accouplement est un accouplement à griffes (36).
